# EUROPÄISCHE PATENTSCHRIFT

(11) **EP 0 598 455 B1**
(45) Veröffentlichungstag und Bekanntmachung des Hinweises auf die Patenterteilung: **19.09.2001**
(21) Anmeldenummer: 93203198.2
(22) Anmeldetag: 16.11.1993
(51) Int. Cl.: H04J 3/06, H04Q 11/04, H04J 3/16

(54) **Übertragungssystem der synchronen digitalen Hierarchie**
Transmission system for synchronous digital hierarchy
Système de transmission pour la hiérarchie numérique synchrone

(30) Priorität: 19.11.1992 DE 4238899
(43) Veröffentlichungstag der Anmeldung: 25.05.1994
(73) Patentinhaber: LUCENT TECHNOLOGIES INC., Murray Hill, New Jersey 07974-0636 (US)
(72) Erfinder: Urbansky, Ralph, Dr. Ing., c/o Philips, D-20097 Hamburg (DE)
(74) Vertreter: Buckley, Christopher Simon Thirsk

(56) Entgegenhaltungen:
- EP-A- 0 448 020
- EP-A- 0 528 402
- GB-A- 2 191 913
- US-A- 4 967 410
- ERICSSON REVIEW, Bd.69, Nr.3, Oktober 1992, STOCKHOLM SE Seiten 78 - 88, XP323322 BERGKVIST J A ; EVANGELISTI G ; HOPFINGER J 'AXD 4/1, a digital cross-connect system'
- GLOBECOM 88, Bd.2, 1. Dezember 1988, HOLLYWOOD, US Seiten 975 - 979, XP11440 R.J. BOEHM 'The SONET interface and network applications'

## Beschreibung

Die Erfindung bezieht sich auf ein Übertragungssystem mit wenigstens einer Übertragungsvorrichtung zur Neubildung wenigstens eines abgehenden, eine vorbestimmte Rahmenstruktur aufweisenden Signales einer synchronen digitalen Hierarchie gemäß dem Oberbegriff des Anspruches 1 sowie auf eine Übertragungsvorrichtung für dieses Übertragungssystem gemäß dem Oberbegriff des Anspruches 12.

Mit der synchronen digitalen Hierarchie wird ermöglicht, in einem Übertragungssystem beliebige Signalbündel zusammenzufügen, aufzuteilen, abzuzweigen, einzuspeisen oder umzuleiten. Beispielsweise können die in einer Übertragungsvorrichtung einlaufenden plesiochronen Nutzkanalsignalströme (in Europa: 2Mbits/s, 34 Mbit/s und 140 Mbit/s) mit einer Abbildungsvorschrift (Mapping) so aufbereitet werden, daß sie immer in einem einheitlichen 125 *µ*s-langen synchronen Transportrahmen (STM-1-Rahmen) als STM-1-Signal mit der Bitrate von 155,52 Mbit/s auf den Übertragungsweg geschickt werden. Ein solcher Netzknoten kann ebenfalls die durch Multiplexbildung von STM-1-Signalen entstehenden höherbitratigen STM-N-Signale (N = 4, 16,...) empfangen und weiterverarbeiten.

Das STM-1-Signal ist nach Rahmen strukturiert und weist außer den eigentlichen Nutzdaten des Signals, Steuerinformation und Stopfdaten auf. Ein STM-1-Rahmen besteht aus 270 Spalten und 9 Zeilen (pro Zeile 270 Bytes). In den Zeilen 1 bis 3 und 5 bis 9, jeweils in den Spalten 1 bis 9, ist der "Section Overhead" (SOH) für Steuerungs- und Fehlererkennungsinformationen und in dem restlichen Bereich (AU-Nutzdatenbereich = AU-Payload) Daten des Signals, Stopfdaten und weitere Steuerungsinformationen untergebracht.

In dem AU-Nutzdatenbereich können mehrere verschiedene Container (C-4, C-3, C-2, C-12 und C-11) untergebracht sein. Unter einem Container wird die Grundverpackungseinheit für digitale Nutzsignale verstanden. Beispielsweise kann in einem STM-1-Rahmen eine Verwaltungseinheit ("Administrative Unit") AU-4 mit einem Container C-4 für Datenblöcke eines Signals mit einer Bitrate von 139,264 Mbit/s eingebracht sein. Weiter können drei Verwaltungseinheiten AU-3 in dem STM-1-Rahmen unetergebracht sein. Davon enthält z.B. eine Verwaltungseinheit AU-3 einen Container C-3 für Datenblöcke eines Signals mit einer Bitrate von 44,736 Mbit/s. Die zweite Verwaltungseinheit AU-3 kann beispielsweise 7 "Tributary Unit Groups" TUG-2 mit jeweils einem Container C-2 für Datenblöcke eines Signals mit einer Bitrate von 6,312 Mbit/s enthalten. In der driten Verwaltungseinheit AU-3 können ferner 7 TUG-2 mit jeweils 3 Containern C-12 für Datenblöcke eines Signals mit einer Bitrate von 2,048 Mbit/s eingefügt sein.

Aus den Containern werden durch Hinzufügung von Steuerinformationen virtuelle Container (z.B. VC-4, VC-3, VC-2, VC-12, VC-11 in einem STM-1-Signal) und bei bestimmten virtuellen Containern (z.B. VC-3, VC-2, VC-12, VC-11 in einem STM-1-Signal) durch Hinzufügung von Pointerbytes und Stopfbytes "Tributary Units" (z.B. TU-3, TU-2, TU-12 und TU-11 in einem STM-1-Signal) gebildet.

Aus der EP-A-0448020 ist ein Datenübertragungsstem zum Übertragen von derartigen SMT-1-Signalen bekannt, die aus mehreren Bitströmen durch Zeitmultiplexen zusammengesetzt werden. Ferner weist das bekannte Datenübertragungssystem eine Koppeleinrichtung auf, mit der es möglich ist, einzelne Bitströme aus mehreren eingehenden STM-1-Signalen gemäß einer vorgegebenen Vorschrift auf mehrere abgehende STM-1-Signale zu verteilen.

Desweiteren ist aus der US-A-4967410 ein Multiplexverfahren und eine Multiplexiervorrichtung für digitale rahmenstrukturierte Signale hoher Bitrate bekannt. Ein solches Signal wird aus mehreren Bitströmen niedrigerer Bitrate, die aus Signalen hoher Bitrate und verschiedener Phasen ausgewählt werden, durch Zeitmultiplexieren zusammengesetzt werden. Um ein Zeitmultiplexen der Signale niedrigerer Bitrate auch bei Vorliegen eines Phasenunterschiedes zwischen den verschiedenen Signalen hoher Bitrate durchführen zu können, erfolgt eine zweistufige Phasensteuerung. In der ersten Stufe wird die Phase von wenigstens einer der zu multiplexierenden Signale niedriger Bitrate, die die gleiche Phase besitzen, verschoben. In der zweiten Stufe werden Zeigerinformationen für die Signale niedriger Bitrate gemäß der Rahmenphase eines neuen Signals höherer Bitrate eingefügt.

Bestimmte virtuelle Container und "Tributary Units" werden im folgenden als Transporteinheiten bezeichnet. Unter einer Transporteinheit sind virtuelle Container zu verstehen, die nicht in weitere virtuelle Container eingefügt sind (z.B. VC-4 in AU-4 und VC-3 in AU-3 bei einem STM-1-Signal) und auch "Tributary Units" zu verstehen (z.B. TU-3, TU-2, Tu-12, TU-11 bei einem STM-1-Signal). Die Transporteinheiten lassen sich in übergeordnete und untergeordnete einteilen. Unter einer übergeordneten Transporteinheit wird eine solche Transporteinheit verstanden, die untergeordnete Transporteinheiten enthält und nicht Bestandteil einer weiteren Transporteinheit ist. Eine untergeordnete Transporteinheit ist in einer übergeordneten Transporteinheit enthalten. Bei einem STM-1-Signal werden beispielsweise der virtuelle Container VC-4, der in einer AU-4 enthalten ist, oder der virtuelle Container VC-3, der in einer AU-3 enthalten ist, als übergeordnete Transporteinheit angesehen. Als untergeordnete Transporteinheiten in einem STM-1-Signal werden die TU-3, Tu-2, Tu-12 und TU-11 bezeichnet.

Aus der EP-A2-0 407 851 ist das oben genannte Übertragungssystem bekannt. Dieses weist mehrere Übertragungsvorrichtungen (Cross-Connectoren) auf, die mittels eines Koppelfeldes verschiedene Transporteinheiten eines STM-1-Signals ausblendet oder einblendet oder STM-1-Signale neu zusammensetzt. Hierbei wird eine zusätzliche vom STM-1-Rahmen abweichende Rahmenstruktur (rahmenstrukturiertes Hilfssignal) verwendet.

Der Erfindung liegt die Aufgabe zugrunde, ein Übertragungssystem zu schaffen, das eine Vertauschung von Transporteinheiten in Signalen der synchronen Hierarchie auf eine andere Art ermöglicht.

Diese Aufgabe wird zum einen durch die Merkmale des Anspruchs 1 und zum anderen durch die Merkmale des Anspruchs 12 gelöst.

Hierzu sind die Transporteinheiten jedes rahmenstrukturierten Signals in übergeordnete und untergeordnete Transporteinheiten eingeteilt. Ferner ist eine Anpassungsschaltung zur Verzögerung wenigstens einer übergeordneten Transporteinheit bis zu einer vorgegebenen Position des empfangenen rahmenstrukturierten Signals vorgesehen, derart, daß die in der verzögerten übergeordneten Transporteinheit enthaltenen untergeordneten Transporteinheiten in vorbestimmten Spalten des empfangenen rahmenstrukturierten Signals liegen. Die Übertragungsvorrichtung weist ferner ein Koppelfeld mit wenigstens einer Zeitstufe auf, die zur Einschreibung und zur spaltenweisen Kennzeichnung der zu speichernden Bytes des angepassten rahmenstrukturierten Signals und zum Auslesen der spaltenweise gekennzeichneten Bytes in einer vorgegebenen Reihenfolge zur Bildung wenigstens eines abgehenden rahmenstrukturierten Signals vorgesehen ist.

Mit dem erfindungsgemäßen Übertragungssystem werden rahmenstrukturierte Signale der synchronen digitalen Hierarchie übertragen. In wenigstens einer Übertragungsvorrichtung des Übertragungssystmes werden untergeordnete Transporteinheiten wenigstens eines rahmenstrukturierten Signals vertauscht oder auch in ein anderes rahmenstrukturiertes Signal eingefügt. Hierzu wird zuerst in einer einem rahmenstrukturierten Signal zugeordneten Anpassungsschaltug eine Rahmenformatanpassung durchgeführt. Dabei wird eine übergeordnete Transporteinheit so lange verzögert, bis die übergeordnete Transporteinheit eine vorgegebene Postition im Rahmen einnimmt. Beispielsweise kann ein virtueller Container VC-4 (übergeordnete Transporteinheit) solange verzögert werden, bis das erste Byte des VC-4 in der ersten Zeile und der zehnten Spalte des STM-1-Rahmens liegt. Durch eine solche Rahmenformatanpassung können die Bytes einer untergeordneten Transporteinheit auf einfache Weise gefunden werden. Es befinden sich durch diese Anpassung in bestimmten Spalten des STM-1-Rahmens nämlich nur Bytes einer untergeordneten Transporteinheit. Das neu zu bildende rahmenstrukturierte Signal kann im Koppelfeld dann durch Zugriff auf bestimmte Spalten von wenigstens einem angepaßten Signal einfach zusammengestellt werden. Im Koppelfeld werden die Bytes eines angepaßten rahmenstrukturierten Signals daher in jeweils eine Zeitstufe eingeschrieben und spaltenweise gekennzeichnet. Die Auslesung der Bytes erfolgt dann in einer vorgegebenen Reihenfolge.
Die Bytes für den "Section Overhead" (SOH) können ebenfalls durch das Koppelfeld gegeben werden oder auch in einer anderen Schaltung neu zusammengestellt werden.
Außer der Rahmenformatanpassung wird in der Anpassungsschaltung auch eine Synchronisierung durchgeführt, da zwischen dem aus dem ankommenden rahmenstrukturierten Signal abgeleiteten Taktsignal (Schreibtaktsignal) und dem lokalen Taktsignal (Auslesetaktsignal) in der Regel Frequenzschwankungen bestehen. Hierbei ist vorgesehen, daß die Anpassungsschaltung eine Pufferspeicheranordnung zur Synchronisierung des mittels eines Schreibtaktsignals einzuschreibenden rahmenstrukturierten Signals, wobei das Schreibtaktsignal aus dem einzuschreibenden rahmenstrukturierten Signal abgeleitet wird, mittels eines lokalen Auslestaktsignals auszulesenden rahmenstrukturierten Signals sowie eine Steuerschaltung enthält, die Frequenzschwankungen zwischen dem Schreibtaktsignal und dem Auslesetaktsignal durch Einfügung von Stopfbytes in die untergeordneten Transporteinheiten des auszulesenden Rrahmenstrukturierten Signals ausgleichen. Eine Synchronisierung wird also durch Einfügung von Stopfbytes in das aus dem Pufferspeicher auszulesende rahmenstrukturierte Signal realisiert. Positiv wird gestopft, wenn das Auslesetaktsignal größer als das Schreibtaktsignal ist. Bei einem umgekehrten Verhältnis wird negativ gestopft. Wenn positiv gestopft wird, werden Datenlücken eingefügt. Bei einer negativen Stopfung wird statt einer Datenlücke ein Nutzdatenbyte transportiert.
Um in der Anpassungsschaltung wenigstens eine übergeordnete Transporteinheit bis zu einer vorgesehenen Position zu verzögern, werden bei der Bildung des angepaßten rahmenstrukturierten Signal Stopfbytes (Datenlücken) eingefügt. Bei der Synchronisierung und der Verzögerung einer übergeordneten Transporteinheit kann ein virtueller Container in einer untergeordneten Transporteinheit so verschoben werden, daß die Verzögerung der untergeordneten Transporteinheit zwischen in die Anpassungsschaltung eingegebenen, rahmenstrukturierten Signal und dem angepaßten, rahmenstrukturierten Signal geringer ist als die Verzögerung der übergeordneten Transporteinheit.

Außer der Vertauschung von Transporteinheiten zwischen verschiedenen rahmenstrukturierten Signalen ist auch eine Ausblendung von Bytes von untergeordneten Transporteinheiten oder eine Einblendung von Bytes einer untergeordneten Transporteinheit in ein STM-1-Signal möglich. Hierbei ist die Raumstufe des Koppelfeldes zur Weiterleitung
- der von den Zeitstufen gelieferten Bytes von rahmensynchronisierten Signalen an bestimmte Ausgänge der Raumstufe zur Bildung von abgehenden, rahmenstrukturierten Signalen,
- der von einer Zeitstufe gelieferten Bytes einer Transporteinheit an einen bestimmten Ausgang der Raumstufe zur Bildung eines Signals mit Bytes einer untergeordneten Transporteinheit und
- eines zu empfangenden Signals mit einer Transporteinheit an einen Ausgang der Raumstufe zur Einblendung der Bytes der Transporteinheit in ein abgehendes, rahmenstrukturiertes Signal vorgesehen.

Mit dieser Ausführungsform werden untergeordnete Transporteinheiten zwischen mindestens zwei rahmenstrukturierten Signalen ausgetauscht. Die in dem Koppelfeld enthaltene Raumstufe bewirkt, daß die ankommenden Bytes einer Zeitstufe auf bestimmte Ausgänge der Raumstufe gegeben sammengestelltes, rahmenstrukturiertes Signal oder ein Signal mit Bytes einer Transporteinheit, das die gleiche Bitrate wie das rahmenstrukturierte Signal aufweist. Außer den Bytes der Transporteinheit sind also auch Datenlücken im Signal enthalten. In einer nachfolgenden Schaltung kann eine weitgehende Entfernung der Datenlücken erfolgen. So kann beispielsweise die in einem STM-1-Signal mit einer Bitrate von ca. 155 MBit/s enthaltene Transporteinheit mittels eines Pufferspeichers in einem Signal mit einer Bitrate von ca. 2 MBit/s untergebracht werden.

Ferner können auch Bytes einer Transporteinheit in ein rahmenstrukturiertes Signal eingeblendet werden. Hierbei werden von der Raumstufe die entsprechenden Bytes der Transporteinheit an den Ausgang der Raumstufe gegeben, die das rahmenstrukturierte Signal liefert.

Ist das rahmenstrukturierte Signal ein STM-1-Signal, so dient eine Anpassungsschaltung entweder zur Verzögerung eines virtuellen Containers VC-4 oder jeweils eines virtuellen Containers VC-3 in einer Einheit AU-3 bis zu einer vorgegebenen Position im STM-1-Rahmen. Die übergeordneten Transporteinheiten im STM-1-Signal sind also der virtuelle Container VC-4 und die virtuellen Container VC-3, wenn diese in eine "Administrative Unit" AU-3 eingefügt werden. Ein virtueller Container VC-3, der in eine TU-3 eingefügt wird, wird nicht den übergeordneten Transporteinheiten zugerechnet. Die TU-3 ist als untergeordnete Transporteinheit anzusehen.

In einer Ausführungsform des Koppelfeldes ist vorgesehen, daß eine Zeitstufe des Koppelfelds eine Detektionsschaltung zur Erkennung des Rahmenanfangs eines STM-1-Signals, eine Speicherschaltung zur Zwischenspeicherung von Bytes eines STM-1-Signals, einen von der Detektionsschaltung gesteuerten Schreibadressengenerator und einen von der Detektionsschaltung gesteuerten Ausleseadressengenerator enthält und daß das Koppelfeld eine Einstellschaltung enthält, welche zur Lieferung der Reihenfolge der auszulesenden Bytes aus der Speicherschaltung und der Verbindungswege für die Raumstufe vorgesehen ist.

Der von der Detektionsschaltung gesteuerte Schreibadressengenerator enthält eine erste Zähleranordnungmit einem Spaltenzähler zur Lieferung von Adressen für den Schreibvorgang der Speicherschaltung. Die Detektionsschaltung setzt, nachdem sie den Anfang eines STM-1-Rahmens erkannt hat, den beispielsweise als Modulo-Zähler ausgebildeten Spaltenzähler der ersten Zähleranordnung auf einen Anfangswert. Als Modulo-Faktor kann der Wert 270 gewählt werden, der genau der Anzahl der Spalten eines STM-1-Rahmens entspricht.

Der von der Detektionsschaltung ebenfalls gesteuerte Ausleseadressengenerator enthält eine zweite Zähleranordnung mit einem Spaltenzähler und einen ersten Tabellenspeicher. Die zweite Zähleranordnung ist zur Lieferung von Adressen für den ersten Tabellenspeicher vorgesehen. Der erste Tabellenspeicher dient zur Übersetzung einer von der zweiten Zähleranordnung gelieferten Adresse in eine bestimmte gespeicherte Adresse für den Lesevorgang der Speicherschaltung. Die Einstellschaltung ist zur Zuführung der Übersetzungstabelle zum ersten Tabellenspeicher vorgesehen.

Die Detektionsschaltung setzt, nachdem sie den Anfang eines STM-1-Rahmens erkannt hat, den beispielsweise als Modulo-Zähler ausgebildeten Spaltenzähler der zweiten Zähleranordnung auf einen Anfangswert. Als Modulo-Faktor Spalten eines STM-1-Rahmens entspricht.

Zur Steuerung der Raumstufe des Koppelfelds dient ein Einstellgenerator. Dieser von der Detektionsschaltung einer Zeitstufe gesteuerter Einstellgenerator enthält eine dritte Zähleranordnung mit einem Spaltenzähler und einen zweiten Tabellenspeicher. Die Zähleranordnung ist zur Lieferung von Adressen für den zweiten Tabellenspeicher vorgesehen. Der zweite Tabellenspeicher ist zur Übersetzung einer von dem Zähleranordnung gelieferten Adresse in bestimmte Einstellwerte für die Verbindungswege der Raumstufe bestimmt. Die Einstellschaltung dient noch zur Zuführung der Übersetzungstabelle zum zweiten Tabellenspeicher. In der Raumstufe des Koppelfeldes werden jeweils spaltenweise die Verbindungswege geschaltet. Zur Einstellung der Verbindungswege dienen von einem zweiten Tabellenspeicher gelieferte Einstellwerte. Der zweite Tabellenspeicher übersetzt anhand seiner gespeicherten Übersetzungstabelle die von der dritten Zähleranordnung gelieferten Adressen.

Weiter sind die erste Zähleranordnung und der erste Tabellenspeicher jeweils nur zur Lieferung von niederwertigsten Bits des Zähler- bzw. Speicherwertes vorgesehen. Auf Grund der sich wiederholenden Spalten einer untergeordneten Transporteinheit (z.B 84 TU-11 sind jeweils 3 Spalten zugeordnet, 63 TU-12 sind jeweils 4 Spalten zugeordnet) kann die Speicherschaltung einer Zeitstufe beispielsweise 180 Speicherplätze (2 * 90 Spalten) statt 540 Speicherplätze (2 * 270 Spalten) aufweisen.

Der SOH (Section Overhead) kann über die Übertragungsvorrichtung gegeben werden oder jeweils in einer parallelgeschalteten Vorrichtung neu zusammengestellt werden. Wenn der SOH in einer parallelgeschalteten Vorrichtung neu zusammengestellt wird, wird eine Speicherung der SOH-Bytes in der Speicherschaltung einer Zeitstufe nicht vorgenommen. Daher enthalten die erste, zweite und dritte Zähleranordnung noch einen Zeilenzähler, eine Auswerteschaltung und eine Freigabeschaltung. Der von dem Spaltenzähler gesteuerte Zeilenzähler und der Spaltenzähler sind zur Zuführung ihrer Zählerwerte zur Auswerteschaltung vorgesehen. Die Auswerteschaltung dient zur Lieferung eines Freigabewertes an die Freigabeschaltung wenigstens bei keinem Vorliegen eines SOH. Die Freigabeschaltung ist bei Vorliegen eines Freigabewertes zur Freigabe einer von dem Spaltenzähler gelieferten Adressse bestimmt.

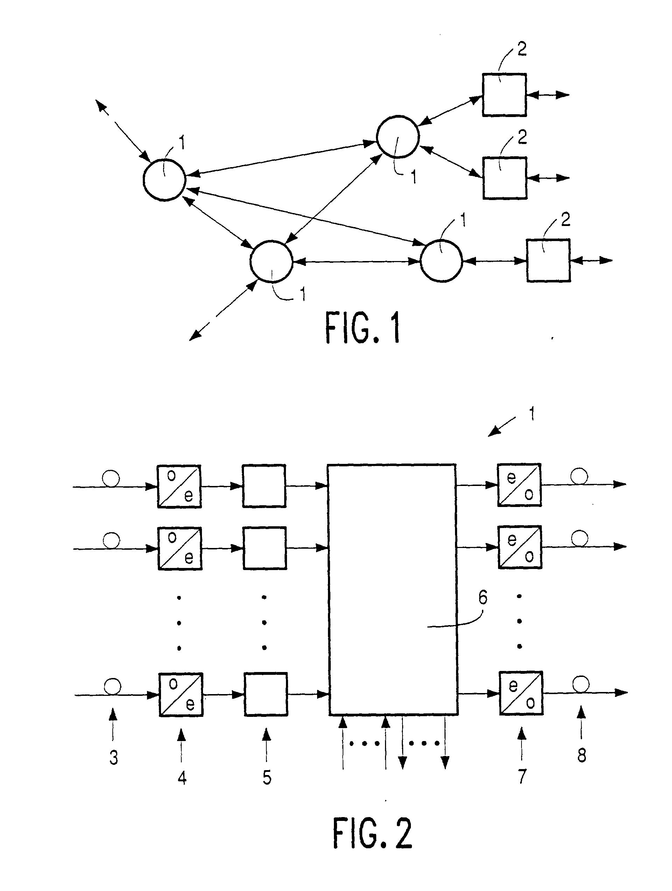

Ein Ausführungsbeispiel der Erfindung wird nachstehend anhand der Figuren näher erläutert. Es zeigen:
- Fig. 1: ein Übertragungssystem zur Übertragung von Signalen der synchronen digitalen Hierarchie,
- Fig. 2: ein Blockschaltbild einer in dem Übertragungssystem nach Fig. 1 verwendeten Übertragungsvorrichtung,
- Fig. 3: eine schematische Darstellung von zwei aufeinanderfolgenden STM-1-Rahmen,
- Fig. 4: ein Blockschaltbild einer in Fig. 2 verwendeten Anpassungsschaltung,
- Fig. 5: ein in die Anpassungsschaltung nach Fig. 4 einzuschreibendes STM-1-Signal und ein aus der Anpassungsschaltung nach Fig. 4 auzulesendes STM-1-Signal,
- Fig. 6: ein Blockschaltbild eines in der Fig. 2 verwendeten Koppelfeldes,
- Fig. 7: ein Blockschaltbild einer in dem Koppelfeld nach Fig. 6 verwendeten Zeitstufe und
- Fig. 8: ein Blockschaltbild einer in dem Koppelfeld nach
Das Übertragungssystem für die synchrone digitale Hierarchie nach Fig. 1 enthält mehrere Übertragungsvorrichtungen 1, die teilweise über Verbindungen miteinander gekoppelt sind. Eine solche Übertragungsvorrichtung 1 empfängt und sendet mindestens ein STM-1-Signal. Des weiteren kann die Übertragungsvorrichtung 1 beispielsweise Signale von Schnittstellenschaltungen 2 empfangen oder an diese senden. Eine solche Schnittstellenschaltung 2 empfängt beispielsweise ein Signal mit einer untergeordneten Transporteinheit eines STM-1-Signals. In der Schnittstellenschaltung 2 wird dieses an das Format des STM-1-Rahmens angepaßt und der Übertragungsvorrichtung 1 gesendet. Umgekehrt werden aus einem empfangenen Signal mit einer untergeordneten Transporteinheit Datenlücken entfernt und als ein Signal mit einer geringeren Bitrate weitergegeben.

Ein Blockschaltbild einer Übertragungsvorrichtung 1 ist in der Fig. 2 gezeigt. Dieser Übertragungsvorrichtung 1 werden über mehrere Lichtwellenleiter 3 STM-1-Signale zugeführt. Jeweils ein optisch/elektrischer Umsetzer 4 setzt die optischen Signale in elektrische Signale um. In jeweils einer nachfolgenden Anpassungsschaltung 5 wird eine Rahmenformatanpassung des rahmenstrukturierten STM-1-Signals durchgeführt. Die von den Anpassungsschaltungen 5 ausgegebenen, angepaßten STM-1-Signale werden einem Koppelfeld 6 zugeführt, das Signale mit untergeordneten Transporteinheiten von einer Schnittstellensschaltung 2 erhält oder Signale mit untergeordneten Transporteinheiten, die zuvor aus einem STM-1-Signal ausgeblendet worden sind, zu einer Schnittstellenschaltung 2 leitet. Außerdem werden untergeordnete Transporteinheiten aus einem STM-1-Signal in ein anderes STM-1-Signal eingefügt. Diese neu gebildeten STM-1-Signale werden elektrisch/optischen Umsetzern 7 zugeführt, die aus den elektrischen Signalen optische Signale bilden. Die optischen Signale werden dann über Lichtwellenleiter 8 weitergegeben.

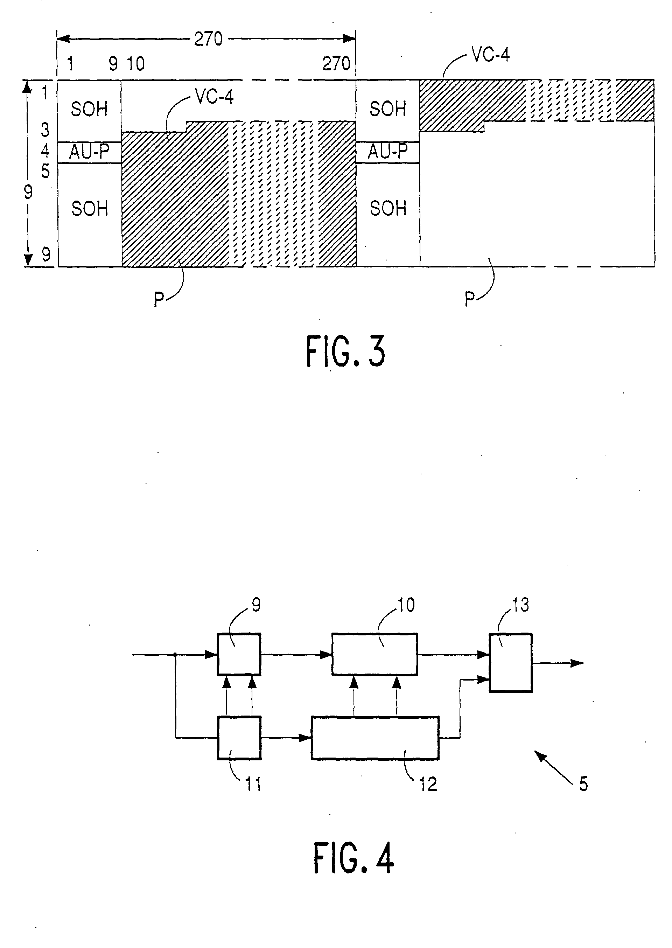

Das STM-1-Signal ist nach Rahmen strukturiert und weist außer den eigentlichen Nutzdaten des Signals Steuerinformationen und Stopfdaten auf. Zwei aufeinanderfolgende STM-1-Rahmen sind in Fig. 3 dargestellt. Ein STM-1-Rahmen besteht aus 270 Spalten und 9 Zeilen (pro Zeile 270 Bytes). In den ersten 9 Spalten, in den Zeilen 1 bis 3 und 5 bis 9 ist der "Section Overhead" (SOH) und in Zeile 4 der "AU-Pointer" (AU-P) untergebracht. In dem restlichen Bereich (AU-Nutzdatenbereich P), in den Spalten 10 bis 270, sind Nutzdatenbytes, Stopfbytes und weitere Bytes für Steuerungsinformationen eingefügt. Der AU-Pointer enthält die Information über das erste Bit eines virtuellen Containers VC-4 in einer "Administrative Unit" AU-4 bzw. VC-3 in einer "Administrary Unit" AU-3. In der Fig. 3 ist ein solcher VC-4 in zwei aufeinanderfolgenden Rahmen dargestellt. Dieser VC-4 beginnt an einer beliebigen Stelle im Nutzdatenbereich im ersten STM-1-Rahmen und endet im zweiten aufeinanderfolgenden STM-1-Rahmen.

Ein solcher VC-4 kann beispielsweise drei "Tributary Unit Groups" TUG-3 enthalten. Der VC-4 enthält in der ersten Spalte einen "Path Overhead" (POH) und in den beiden folgenden Spalten feste Stopfbytes. Ab der Spalte 4 des AU-Nutzdatenbereichs P werden jeweils abwechselnd Spalten der drei TUG-3 eingefügt.

Eine TUG-3 enthält 86 Spalten mit festen Stopfbytes in der ersten und zweiten Spalte. In den restlichen Spalten der TUG-3 sind Bytes von Transporteinheiten TU-2, TU-12 oder TU-11 untergebracht. Beispielsweise enthält jede TUG-3 63 TU-12 mit jeweils 4 Spalten. Ein STM-1-Rahmen enthält jedoch nur ein Viertel der Bytes einer TU-12. Die restlieingesetzt. In einer TU-12 wird ein virtueller Container VC-12 transportiert. Das erste Byte eines solchen vituellen Containers VC-12 wird von den Pointer-Bytes der TU-12 angegeben. Die Pointer-Bytes, die den Beginn eines VC-12 angeben, sind im ersten Byte des ersten und zweiten Viertels einer TU-12 enthalten.

Es sei noch einmal bemerkt, daß die Transporteinheiten in übergeordnete und untergeordnete eingeteilt sind. Unter einer übergeordneten Transporteinheit in einem STM-1-Signal werden beispielsweise die virtuellen Container VC-4, die in einer AU-4 transportiert werden, und die virtuellen Container VC-3 verstanden, die in einer AU-3 transportiert werden. Als untergeordnete Transporteinheiten werden bei einem STM-1-Signal beispielsweise die TU-3, TU-2, TU-12 und TU-11 verstanden.

In der Fig. 4 ist ein Blockschaltbild einer in der Fig. 2 verwendbaren Anpassungsschaltung 5 dargestellt. Eine solche Anpassungsschaltung enthält eine Pufferspeicheranordnung mit einem Vorpufferspeicher 9 und einem Hauptpufferspeicher 10, eine Steuerschaltung mit einer Vorsteuerschaltung 11 und einer Hauptsteuerschaltung 12 und einen Multiplexer 13. Mittels des Vorpufferpeichers 9 und der Vorsteuerschaltung 11 findet eine Synchronisierung des in den Vorpufferspeicher 9 eingeschriebenen STM-1-Signals mit dem aus dem Vorpufferspeicher 9 auszulesenden STM-1-Signal statt. In der Vorsteuerschaltung 11 befindet sich ein Schreibzähler, der von einem aus dem in den Vorpufferspeicher 9 einzuschreibenden STM-1-Signal abgeleiteten Schreibtaktsignal getaktet wird. Ein lokales Taktsignal, das als Auslesetaktsignal bezeichnet wird, wird einem ebenfalls in der Vorsteuerschaltung 11 enthaltenen Auslesezähler zugeführt. Das Schreibtaktsignal und das Auslesetaktsignal weisen in der Regel Frequenz- und Phasenschwankungen auf. Diese Frequenz- und Phasenschwankungen werden mit Hilfe des Vorpufferspeichers 9 und der Vorsteuerschaltung 11 ausgeglichen. Es werden in das auszulesende STM-1-Signal Stopfbytes eingefügt, wodurch eine Synchronisierung mit dem eingeschriebenen STM-1-Signal erfolgt. Positiv wird gestopft, wenn das Auslesetaktsignal größer als das Schreibtaktsignal ist. In diesem Fall werden Datenlücken eingefügt. Bei einer negativen Stopfung, wenn das Auslesetaktsignal kleiner als das Schreibtaktsignal ist, wird statt einer Datenlücke ein Nutzdatenbyte transportiert. Mittels des Hauptpufferspeichers 10, der Hauptsteuerschaltung 12 und des Multiplexers 13 werden die Stopfbytes an entsprechende im STM-1-Rahmen vorgesehene Stellen eingefügt. Außerdem wird mit Hilfe des Hauptpufferspeichers eine Rahmenformatanpassung durchgeführt. Die in Fig. 4 dargestellt Schaltungsanordnung ist beispielsweise aus der deutschen Patentanmeldung 42 22 546 bekannt. Wie auch schon in der deutschen Patentanmeldung 42 22 546 angedeutet ist, kann eine Pufferspeicheranordnung nur einen die Funktionen des Vorpufferspeichers und des Hauptpufferspeichers durchführenden Pufferspeicher enthalten.

Bei einer Rahmenformatanpassung wird die übergeordnete Transporteinheit durch Einfügung von Stopfbytes solange verzögert, bis der Anfang einer übergeordneten oder mehrerer übergeordneter Transporteinheiten an einer oder mehreren bestimmten Positionen im STM-1-Rahmen liegt. Beispielsweise kann das erste Byte eines virtuellen Containers VC-4 in der ersten Zeile und der zehnten Spalte nach der Rahmenformatanpassung liegen. Die durch die Synchronisierung zwischen dem in den Vorpuffer 9 eingeschriebenen STM-1-Signal und dem aus dem Vorpuffer auszulesenden STM-1-Signal erzeugten Stopfbytes werden nur in die untergeordneten Transporteinheiten des auszulesenden STM-1-Siweisen keine Stopfaktionen aus.

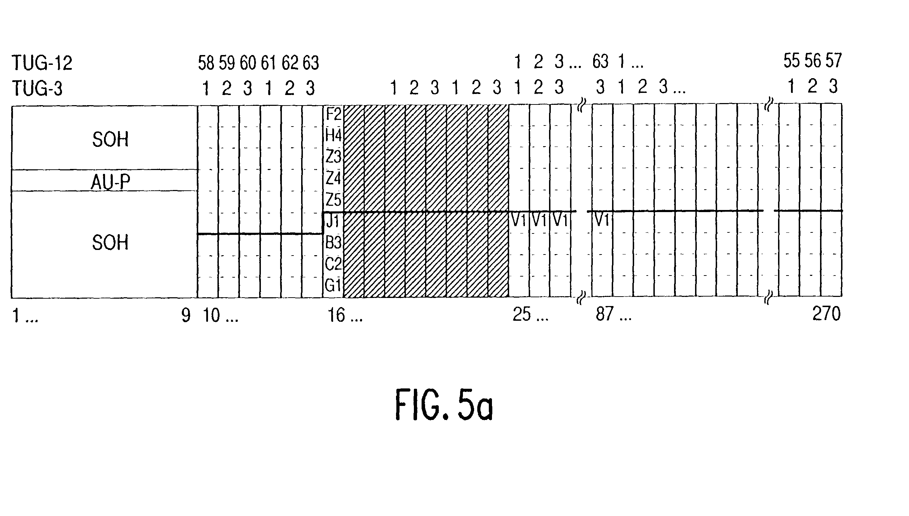

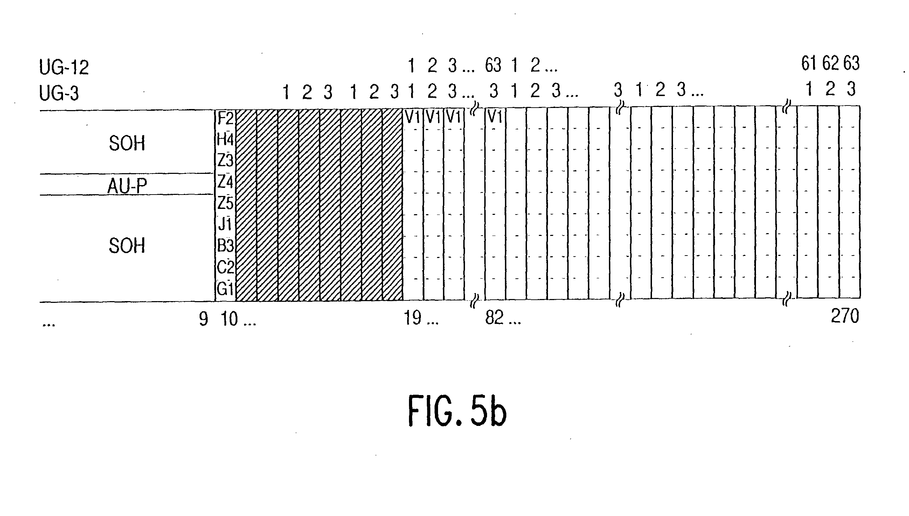

Eine Rahmenformatanpassung für eine übergeordnete Transporteinheit VC-4 ist in der Fig. 5 dargestellt. In Fig. 5a ist ein Rahmen dargestellt, welcher der Anpassungsschaltung 5 zugeführt werden soll. Der Anfang des VC-4 (J1-Byte) liegt in der Spalte 16 und der Zeile 6. In dem virtuellen Container VC-4 sind noch weiter drei TUG-3 und in jeder TUG-3 21 TU-12 enthalten. Die erste Zeile mit vorgegebenen Daten einer TUG-3 beginnt in der Spalte 19 des STM-1-Rahmens. Die Spalte 1 der zweiten TU-3 liegt in der Spalte 20 des STM-1-Rahmens und die Spalte 1 der dritten TUG-3 liegt in der Spalte 21 des STM-1-Rahmens. Die Spalte 3 der ersten TUG-3 (Spalte 25 des STM-1-Rahmens) enthält den Anfang der Spalte 1 der ersten Transporteinheit TU-12. Das erste Byte dieser Spalte 1 der ersten TU-12 enthält ein Pointerbyte V1. Die anderen drei Spalten der ersten Transporteinheit TU-12 beginnen in der Spalte 88, 151 und 214 des STM-1-Rahmens.

Durch die Rahmenformatanpassung wird der Anfang der übergeordneten Transporteinheit VC-4 in die Spalte 10 und Zeile 1 gesetzt (vgl. Fig 5b). Daher liegt die Spalte 1 einer ersten TUG-3 in der Spalte 13 des STM-1-Rahmens und die Spalte 1 der ersten untergeordneten TU-12 in der Spalte 19 des STM-1-Rahmens. Die erste TU-12 ist in dem STM-1-Rahmen der Fig. 5b jeweils in den Spalten 19, 82, 145 und 208 enthalten.

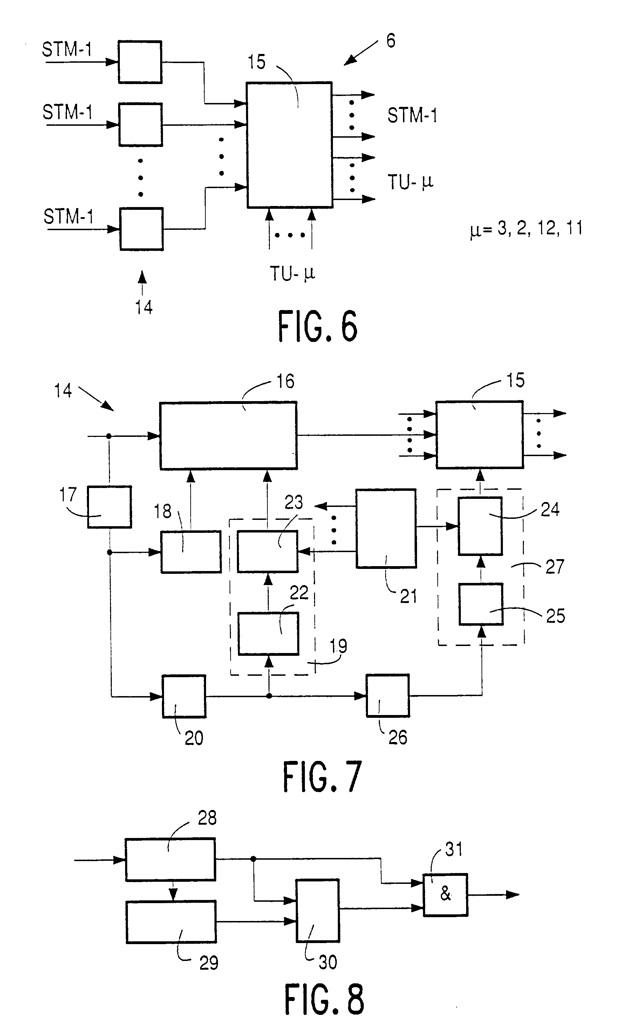

Mittels des Koppelfeldes 6, von dem in der Fig. 6 ein Blockschaltbild dargestellt ist, können verschiedene untergeordnete Transporteinheiten eines STM-1-Signals in ein anderes STM-1-Signal eingeblendet, eine Transporteinheit an eine Schnittstellenschaltung 2 geliefert werden oder eine von einer Schnittstellenschaltung 2 gelieferte Transporteinheit in ein STM-1-Signal eingeblendet werden. Hierzu enthält das Koppelfeld 6, wie Fig. 6 zeigt, mehrere Zeitstufen 14, die jeweils ein STM-1-Signal empfangen. Die Ausgänge der Zeitstufen 14 sind jeweils mit Eingängen einer Raumstufe 15 gekoppelt. Weiter erhält die Raumstufe 15 noch Signale mit untergeordneten Transporteinheiten von einer Schnittstellenschaltung 2. Über verschiedene Ausgänge werden von der Raumstufe 15 STM-1-Signale und Signale mit untergeordneten Transporteinheiten ausgegeben.

Ein detaillierter dargestelltes Ausführungsbeispiel einer Zeitstufe 14 und weiterer Schaltelemente zeigt Fig. 7. Diese enthält eine Speicherschaltung 16, eine Detektionsschaltung 17, einen Schreibadressengenerator 18, einen Ausleseadressengenerator 19, zwei Verzögerungsschaltungen 20 und 26, eine Einstellschaltung 21 und einen Einstellgenerator 27 für die Raumstufe 15. Die Detektionsschaltung 17, die den Anfang eines STM-1-Rahmens erkennt, liefert ein Setzsignal für einen als erste Zähleranordnung ausgebildeten Schreibadressengenerator 18. Die erste Zähleranordnung enthält einen Spaltenzähler, der die Spalten eines STM-1-Rahmens zählt. Der Spaltenzähler kann ein Modulo-Zähler mit dem Modulo-Faktor 270 sein (270 Spalten). Nach Empfang des Setzsignals wird der Spaltenzähler auf einen Anfangswert gesetzt. Die Detektionsschaltung 17 ist beispielsweise näher in der deutschen Patentanmeldung 42 05 959 beschrieben. Des weiteren liefert die Detektionsschaltung 17 das Setzsignal über eine erste Verzögerungsschaltung 20 an eine im Ausleseadressengenerator 19 enthaltene zweite Zähleranordnung 22. Diese zweite Zähleranordnung 22 enthält ebenfalls einen Spaltenzähler, der ein Modulo-Zähler mit dem Modulo-Faktor 270 sein kann. Die adressengenerator 18 liefert Adressen für die Speicherschaltung 16, die spaltenweise Daten des STM-1-Signals einliest. In der Regel ist die Speicherschaltung 16 mit der doppelten Anzahl von Speicherzellen ausgebildet, um Zeitprobleme beim Auslesen zu vermeiden.

Die Spaltenzähler in dem Schreibadressengenerator 18 und im Ausleseadressengenerator 19 liefern eine Adresse von 9 Bit, wenn alle 270 Werte in die Speicherschaltung 16 eingeschrieben werden sollen. Da maximal 84 untergeordnete Transporteinheiten (nämlich 84 TU-11) in einem STM-1-Signal transportiert werden können und bei dieser Transport-variante die Spalten der TU-11 nach 84 Spalten sich wiederholen, ist beispielsweise ein Speicher zur Speicherung von 90 Spalten ausreichend. Aus diesem Grund werden nur ein Teil der niederwertigsten Bits der Spaltenzähler des Schreibadressengenerators 18 und des Ausleseadressengenerators 19 weitergegeben. Hierbei ist es ausreichend, wenn die niederwertigsten 7 Bits der Adresse der Spaltenzähler weitergegeben werden.

Die spaltenweise in die Speicherschaltung 16 eingelesenen Bytes eines STM-1-Rahmens werden in einer anderen Reihenfolge ausgelesen. Die Adressen für den Auslesevorgang liefert ein im Ausleseadressengenerator 19 enthaltener erster Tabellenspeicher 23. Der erste Tabellenspeicher 23 übersetzt die von der zweiten Zähleranordnung 22 gelieferten Adressen in eine andere Adresse. Die Übersetzungstabelle ist dem ersten Tabellenspeicher 23 von einer Einstellschaltung 21 geliefert worden. Die Speicherschaltung 16 liest gesteuert von dem Ausleseadressengenerator 19 entweder Bytes einer untergeordneten Transporteinheit für einen anderen STM-1-Rahmen oder Bytes für ein neu zu bildendes STM-1-Signal oder Bytes für ein Signal mit Daten einer untergeordneten Transporteinheit aus. In der Raumstufe 15 werden jeweils spaltenweise (byteweise) Verbindungswege zwischen seinen Eingängen, die mit Speicherschaltungen 16 der Zeitstufen 14 gekoppelt sind, und seinen Ausgängen hergestellt. Zur Einstellung der Verbindungswege werden der Raumstufe 15 spaltenweise Einstellwerte von einem Adreßgenerator 27 geliefert. Der Einstellgenerator 27 enthält einen zweiten Tabellenspeicher 24 und eine dritte Zähleranordnung 25. Die Zähleranordnung 25 wird von einer Detektionsschaltung 17 einer Zeitstufe 14 mittels eines Setzsignals auf einen Anfangswert gesetzt. Dieses Setzsignal duchläuft ebenfalls die erste Verzögerungsschaltung 20 und eine zweite Verzögerungsschaltung 26. Mit diesen beiden Verzögerungsschaltungen soll die Durchlaufzeit durch die Speicherschaltung 16 ausgeglichen werden. Die Zähleranordnung 25 enthält einen Spaltenzähler, der als Modulo-Zähler mit dem Modulo-Faktor 270 ausgebildet sein kann. Die von der Zähleranordnung 25 gelieferten Adressen werden im zweiten Tabellenspeicher 24 in Einstellwerte übersetzt. Die Einstellwerte sind jeweils von der Einstellschaltung 21 geliefert worden.

Die SOH-Daten eines STM-1-Rahmens können über eine Anpassungsschaltung 5 und das Koppelfeld 6 geführt werden. Es ist aber auch möglich, falls die SOH-Daten verändert werden sollen, diese über eine parallel angeordnete Schaltung zu geben.

Wenn die SOH-Daten nicht über das Koppelfeld 6 laufen, wird zum Zeitpunkt des Auftretens eines SOH-Bytes keine Adresse der Speicherschaltung 16 oder kein Einstellwert der Raumstufe 15 geliefert. Um den Zählvorgang dann anzuhalten, ist eine Erweiterung der ersten, zweiten und drit-Faktor 270). Wenn das Ende einer Zeile eines Rahmens (nach 270 Adressen) erreicht wird, wird ein Zeilenzähler 29, der als Modulo-Zähler mit dem Modulo-Faktor 9 ausgebildet ist, inkrementiert. Eine Auswerteschaltung 30, welche die Zählerwerte des Spaltenzählers 28 und des Zeilenzählers 29 erhält, steuert eine als UND-Glied ausgebildete Freigabeschaltung 31. Diese Freigabeschaltung 31 gibt bei einem von der Auswerteschaltung 30 gelieferten Freigabewert von "1" die Auswerteschaltung frei, so daß die von dem Spaltenzähler 28 gelieferte Adresse weitergegeben werden kann. Die Auswerteschaltung 30 kann durch folgenden Programmablauf beschrieben werden:

### Zählerwert des Spaltenzählers > 8 ?

- nein:: Zählerwert des Zeilenzählers = 3 ? ja: Freigabewert := 1 nein: Freigabewert := 0
- ja:: Freigabewert := 1

Der Spaltenzähler 28, dessen erste Adresse gleich Null ist, liefert einen Freigabewert von "1", wenn das anstehende Byte des STM-1-Signals kein SOH-Byte ist. Ist das anstehende Byte ein Byte des AU-Pointers (Zeilenzähler gleich "3"; Zeilenzähler beginnt bei Null zu zählen), wird ebenfalls ein Freigabewert von "1" ausgegeben (Spalte 1 bis 8, Zeile 4). In den anderen Fällen wird ein Freigabewert von "0" der Freigabeschaltung 31 zugeführt. Möglich ist auch, daß die Auswerteschaltung 30 weitere Bytes ebenfalls nicht zur Einschreibung in eine Speicherschaltung 16 freigibt.

## Patentansprüche

1. Übertragungssystem mit wenigstens einer Übertragungsvorrichtung (1) zur Neubildung wenigstens eines abgehenden, eine vorbestimmte Rahmenstruktur aufweisenden Signals einer synchronen digitalen Hierarchie, insbesondere durch Vertauschung von Transporteinheiten wenigstens eines empfangenen rahmenstrukturierten Signals mittels eines Koppelfeldes (6), wobei die Rahmenstruktur Spalten und Zeilen aufweist und die Transporteinheiten vorbestimmte Daten des jeweiligen rahmenstrukturierten Signals enthalten,
**dadurch gekennzeichnet**,
daß die Transporteinheiten jedes rahmenstrukturierten Signals in übergeordnete und untergeordnete Transporteinheiten (VC-4, VC-3 bzw. TU-2, TU-3, TU-11, TU12) eingeteilt sind,
daß wenigstens eine Anpassungsschaltung (5) vorgesehen ist, die durch Einfügung von Stopfbytes den Aufang wenigstens einer übergeordneten Transporteinheit an eine vorgegebene Position im empfangenen rahmenstrukturierten Signal setzt und dadurch ein augepasstes rahmenstrukturiertes Signal erzeugt, und
daß das Koppelfeld (6) wenigstens eine Zeitstufe (14) mit einer Speicherschaltung (16) enthält, die zur Einschreibung und zur spaltenweisen Kennzeichnung der zu speichernden Bytes des angepassten rahmenstrukturierten Signals und die zur Auslesung der spaltenweise gekennzeichneten Bytes in einer vorgegebenen Reihenfolge zur Bildung wenigstens eines abgehenden rahmenstrukturierten Signals vorgesehen ist.

2. Übertragungssystem nach Anspruch 1,
**dadurch gekennzeichnet,**
**daß** die Anpassungsschaltung (5) eine Pufferspeicheranordnung (9, 10) zur Synchronisierung des mittels eines Schreibtaktsignals einzuschreibenden rahmenstrukturierten Signals, wobei das Schreibtaktsignal aus dem einzuschreibenden rahmensstrukturierten Signal abgeleitet wird, mit dem mittels eines lokalen Auslesetaktsignals auszulesenden rahmenstrukturierten Signals sowie eine Steuerschaltung (11, 12) enthält, die Frequenzschwankungen zwischen dem Schreibtaktsignal und dem Auslesetaktsignal durch Einfügung von Stopfbytes in die untergeordneten Transporteinheiten des auszulesenden rahmenstrukturierten Signals ausgleicht.

3. Übertragungssystem nach Anspruch 1 oder 2,
**dadurch gekennzeichnet,**
**daß** die Anpassungsschaltung (5) zur Einfügung von Stopfbytes zur Verzögerung wenigstens einer übergeordneten Transporteinheit bis zu einer vorgesehenen Position im angepaßten rahmenstrukturierten Signal vorgesehen ist.

4. Übertragungssystem nach einem der vorhergehenden Ansprüche, **dadurch gekennzeichnet,**
**daß** die Raumstufe (15) des Koppelfeldes (6) zur Weiterleitung
- der von den Zeitstufen (14) gelieferten Bytes von rahmensynchronisierten Signalen an bestimmte Ausgänge der Raumstufe (15) zur Bildung von abgehenden, rahmenstrukturierten Signalen,
- der von einer Zeitstufe (14) gelieferten Bytes einer Transporteinheit an einen bestimmten Ausgang der Raumstufe (15) zur Bildung eines Signals mit Bytes einer untergeordneten Transporteinheit und
- eines zu empfangenden Signals mit einer Transporteinheit an einen Ausgang der Raumstufe (15) zur Einblendung der Bytes der Transporteinheit in ein abgehendes, rahmenstrukturiertes Signal vorgesehen ist.

5. Übertragungssystem nach einem der vorhergehenden Ansprüche, **dadurch gekennzeichnet,**
**daß** das rahmenstrukturierte Signal ein STM-1-Signal ist und daß die Anpassungsschaltung (5) entweder zur Verzögerung eines virtuellen Containers VC-4 oder jeweils eines virtuellen Containers VC-3 in einer Einheit AU-3 bis zu einer vorgegebenen Position im STM-1-Rahmen vorgesehen ist.

6. Übertragungssystem nach Anspruch 5,
**dadurch gekennzeichnet**,
daß die Zeitstufe (14) des Koppelfeldes (6) eine Detektionsschaltung (17) zur Erkennung des Rahmenanfangs eines STM-1-Signals, eine Speicherschaltung (16) zur Zwischenspeicherung von Bytes eines STM-1-Signals, einen von der Detektionsschaltung (17) gesteuerten Schreibadressengenerator (18) und einen von der Detektionsschaltung (17) gesteuerten Ausleseadressengenerator (19) enthält und
daß das Koppelfeld (6) eine Einstellschaltung (21) enthält, welche zur Lieferung der Reihenfolge der auszulesenden Bytes aus der Speicherschaltung (16) und der spaltenweise zu schaltenden Verindungswege für die Raumstufe (15) vorgesehen ist.

7. Übertragungssytem nach Anspruch 6,
**dadurch gekennzeichnet,**
**daß** der Schreibadressengenerator (18) eine erste Zähleranordnung mit einem Spaltenzähler zur Lieferung von Adressen für den Schreibvorgang der Speicherschaltung (16) enthält.

8. Übertragungssystem nach Anspruch 6 oder 7,
dadurch gekennezeichnet,
daß der Ausleseadressengenerator (19) eine zweite Zähleranordnung (22) mit einem Spaltenzähler und einen ersten Tabellenspeicher (23) enthält,
daß die zweite Zähleranordnung (22) zur Lieferung von Adressen für den ersten Tabellenspeicher (23) vorgesehen ist,
daß der erste Tabellenspeicher (23) zur Übersetzung einer von der zweiten Zähleranordnung (22) gelieferten Adresse in eine bestimmte gespeicherte Adresse für den Lesevorgang der Speicherschaltung (16) vorgesehen ist und
daß die Einstellschaltung (21) zur Zuführung der Übersetzungstabelle zum ersten Tabellenspeicher (23) vorgesehen ist.

9. Übertragungssystem nach Anspruch 6, 7 oder 8,
**dadurch gekennzeichnet**,
daß ein von der Detektionsschaltung (17) der Zeitstufe (14) gesteuerter Einstellgenerator (27) eine dritte Zähleranordnung mit einem Spaltenzähler und einen zweiten Tabellenspeicher (24) enthält,
daß die dritte Zähleranordnung (25) zur Lieferung von Adressen für den zweiten Tabellenspeicher (24) vorgesehen ist,
daß der zweite Tabellenspeicher (24) zur Übersetzung einer von der dritten Zähleranordnung (25) gelieferten Adresse in bestimmte Einstellwerte für die Verbindungswege der Raumstufe (15) vorgesehen ist und
daß die Einstellschaltung (21) zur Zuführung der Übersetzungstabelle zum zweiten Tabellenspeicher (24) vorgesehen ist.

10. Übertragungssystem nach den Ansprüchen 7, 8 und 9,
**dadurch gekennzeichnet,**
**daß** die erste Zähleranordnung (18) und der erste Tabellenspeicher (23) jeweils nur zur Lieferung von niederwertigsten Bits des Zähler- bzw. Speicherwertes vorgesehen sind.

11. Übertragungssystem nach den
Ansprüchen 7, 8 und 9 oder 10,
**dadurch gekennzeichnet**,
daß die erste, zweite und dritte Zähleranordnung (18, 22, 25) noch einen Zeilenzähler (29), eine Auswerteschaltung (30) und eine Freigabeschaltung (31) enthalten,
daß der von dem Spaltenzähler (28) gesteuerte Zeilenzähler (29) und der Spaltenzähler (28) zur Zuführung ihrer Zählerwerte zur Auswerteschaltung (30) vorgesehen sind,
daß die Auswerteschaltung (30) zur Lieferung eines Freigabewertes an die Freigabeschaltung (31) wenigstens bei keinem Vorliegen eines SOH vorgesehen ist und
daß die Freigabeschaltung (31) bei Vorliegen eines Freigabewertes zur Freigabe einer von dem Spaltenzähler (28) gelieferten Adresse vorgesehen ist.

12. Übertragungsvorrichtung zum Einsatz in einem Übertragungssystem nach einem der Ansprüche 1 bis 11 zur Neubildung wenigstens eines abgehenden, eine vorbestimmte Rahmenstruktur aufweisenden Signals einer synchronen digitalen Hierarchie, insbesondere durch Vertauschung von Transporteinheiten wenigstens eines empfangenen rahmenstrukturierten Signals mittels eines Koppelfeldes (6), wobei die Rahmenstruktur Spalten und Zeilen aufweist und die Transporteinheiten vorbestimmte Daten des jeweiligen rahmenstrukturierten Signals enthalten,
**dadurch gekennzeichnet**,
daß die Transporteinheiten jedes rahmenstrukturierten Signals in übergeordnete und untergeordnete Transporteinheiten (VC-4, VC-3 bzw. TU-2, TU-3, TU-11, TU12) eingeteilt sind,
daß wenigstens eine Anpassungsschaltung (5) vorgesehen, ist, die durch Einfügung von Stopfbytes den Anfang wenigstens einer übergeordneten Transporteinheit an eine vorgegebene Position im empfangenen rahmenstrukturierten Signal setzt und dadurch ein angepasstes rahmenstrukturiertes Signal erzeugt und
daß das Koppelfeld (6) wenigstens eine Zeitstufe (14) mit einer Speicherschaltung (16) enthält, die zur Einschreibung und zur spaltenweisen Kennzeichnung der zu speichernden Bytes des angepassten rahmenstrukturierten Signals und die zur Auslesung der spaltenweise gekennzeichneten Bytes in einer vorgegebenen Reihenfolge zur Bildung wenigstens eines abgehenden rahmenstrukturierten Signals vorgesehen ist.

## Claims

1. Transmission system having at least one transmission apparatus (1) for re-forming at least one outgoing signal, which has a predetermined frame structure, in a synchronous digital hierarchy, in particular by interchanging transport units of at least one received frame-structured signal by means of a switching matrix (6), with the frame structure having columns and rows and the transport units containing predetermined data for the respective frame-structured signal,
characterized
in that the transport units in each frame-structured signal are subdivided into higher-level and lower-level transport units (VC-4, VC-3 and TU-2, TU-3, TU-11, TU12),
in that at least one matching circuit (5) is provided, which adds stuffing bytes to place the start of at least one higher-level transport unit at a predetermined position in the received frame-structured signal and in this way produces an adapted frame-structured signal, and
in that the switching matrix (6) contains at least one timing stage (14) with a memory circuit (16) which is intended for writing and for column-by-column identification of the bytes to be stored from the adapted frame-structured signal, and is intended for reading the bytes identified column-by-column in a predetermined sequence in order to form at least one outgoing frame-structured signal.

2. Transmission system according to Claim 1,
**characterized**
**in that** the matching circuit (5) contains a buffer memory arrangement (9, 10) for synchronization of the frame-structured signal which is to be written by means of a write clock signal, with the write clock signal being derived from the frame-structured signal to be written, together with the frame-structured signal to be read by means of a local read clock signal, and contains a control circuit (11, 12) which compensates for frequency fluctuations between the write clock signal and the read clock signal by insertion of stuffing bytes into the lower-level transport units of the frame-structured signal to be read.

3. Transmission system according to Claim 1 or 2,
**characterized**
**in that** the matching circuit (5) is intended for insertion of stuffing bytes in order to delay at least one higher-level transport unit to an intended position in the adapted frame-structured signal.

4. Transmission system according to one of the preceding claims, **characterized**
**in that** the space-division multiplex stage (15) of the switching matrix (6) is intended for passing on
- those bytes in frame-synchronized signals which are supplied from the timing stages (14) at specific outputs of the space-division multiplex stage (15) in order to form outgoing, frame-structured signals,
- those bytes of a transport unit which are supplied by a timing stage (14) to a specific output of the space-division multiplex stage (15), in order to form a signal having bytes of a lower-level transport unit, and
- a signal to be received, with a transport unit, to one output of the space-division multiplex stage (15) in order to overlay the bytes in the transport unit into an outgoing frame-structured signal.

5. Transmission system according to one of the preceding claims, **characterized**
**in that** the frame-structured signal is an STM-1 signal, and in that the matching circuit (5) is intended either for delaying a virtual container VC-4 or a respective virtual container VC-3 in a unit AU-3 to a predetermined position in the STM-1 frame.

6. Transmission system according to Claim 5,
characterized
in that the timing stage (14) of the switching matrix (6) contains a detection circuit (17) for identification of the frame start in an STM-1 signal, a memory circuit (16) for temporary storage of bytes in an STM-1 signal, a write address generator (18) which is controlled by the detection circuit (17), and a read address generator (19) which is controlled by the detection circuit (17), and
in that the switching matrix (6) contains an adjustment circuit (21) which is intended for supplying the sequence of the bytes to be read from the memory circuit (16) and for supplying the connection routes which are to be switched column-by-column, for the space-division multiplex stage (15).

7. Transmission system according to Claim 6,
**characterized**
**in that** the write address generator (18) contains a first counter arrangement having a column counter for supplying addresses for the write process for the memory circuit (16).

8. Transmission system according to Claim 6 or 7,
characterized
in that the read address register (19) contains a second counter arrangement (22) having a column counter, and contains a first table memory (23),
in that the second counter arrangement (22) is intended for supplying addresses for the first table memory (23),
in that the first table memory (23) is intended for conversion of an address supplied from the second counter arrangement (22) to a specific stored address for the reading process for the memory circuit (16), and
in that the adjustment circuit (21) is intended for supplying the conversion table to the first table memory (23).

9. Transmission system according to Claim 6, 7 or 8,
characterized
in that an adjustment generator (27), which is controlled by the detection circuit (17) in the timing stage (14), contains a third counter arrangement having a column counter, and contains a second table memory (24),
in that the third counter arrangement (25) is intended for supplying addresses for the second table memory (24),
in that the second table memory (24) is intended for conversion of an address supplied from the third counter arrangement (25) to specific adjustment values for the connecting routes of the space-division multiplex stage (15), and in that the adjustment circuit (21) is intended for supplying the conversion table to the second table memory (24).

10. Transmission system according to Claims 7, 8 and 9,
**characterized**
**in that** the first counter arrangement (18) and the first table memory (23) are each intended only for supplying the least-significant bytes of the counter or memory value, respectively.

11. Transmission system according to
Claims 7, 8 and 9 or 10,
characterized
in that first, the second and the third counter arrangement (18, 22, 25) also contain a row counter (29), an evaluation circuit (30) and an enable circuit (31),
in that the row counter (29), which is controlled by the column counter (28), and the column counter (28) are intended for supplying their counter values to the evaluation circuit (30),
in that the evaluation circuit (30) is intended for supplying an enable value to the enable circuit (31) at least when no SOH is present, and
in that the enable circuit (31) is intended for enabling an address, which is supplied from the column counter (28), when an enable value is present.

12. Transmission apparatus for use in a transmission system according to one of Claims 1 to 11 for re-forming at least one outgoing signal, which has a predetermined frame structure, in a synchronous digital hierarchy, in particular by interchanging transport units of at least one received frame-structured signal by means of a switching matrix (6), with the frame structure having columns and rows and the transport units containing predetermined data for the respective frame-structured signal,
characterized
in that the transport units in each frame-structured signal are subdivided into higher-level and lower-level transport units (VC-4, VC-3 and TU-2, TU-3, TU-11, TU12),
in that at least one matching circuit (5) is provided, which adds stuffing bytes to place the start of at least one higher-level transport unit at a predetermined position in the received frame-structured signal and in this way produces an adapted frame-structured signal, and
in that the switching matrix (6) contains at least one timing stage (14) with a memory circuit (16) which is intended for writing and for column-by-column identification of the bytes to be stored from the adapted frame-structured signal, and is intended for reading the bytes identified column-by-column in a predetermined sequence in order to form at least one outgoing frame-structured signal.

## Revendications

1. Système de transmission comprenant au moins un dispositif de transmission (1) pour reformer au moins un signal sortant, présentant une structure de trame prédéfinie, d'une hiérarchie numérique synchrone, notamment par substitution des unités de transport d'au moins d'un signal reçu structuré en trames au moyen d'un réseau de connexion (6), la structure en trames présentant des colonnes et des lignes et les unités de transport contenant des données prédéfinies du signal structuré en trames correspondant, **caractérisé en ce que**
les unités de transport de chaque signal structuré en trames sont réparties en unités de transport supérieures et subordonnées (VC-4, VC-3 ou TU-2, TU-3, TU-11, TU12),
il est prévu au moins un circuit d'adaptation (5) qui place au moins le début d'une unité de transport supérieure en une position prédéfinie dans le signal structuré en trames reçu en insérant des octets de bourrage et produit ainsi un signal structuré en trames adapté, et
le réseau de connexion (6) comprend au moins un étage temporel (14) avec un circuit mémoire (16) qui sont prévus pour écrire et pour identifier par colonne les octets à mémoriser du signal structuré en trames adapté et pour lire les octets identifiés par colonne dans un ordre donné pour former au moins un signal structuré en trames sortant.

2. Système de transmission selon la revendication 1, **caractérisé en ce que** le circuit d'adaptation (5) comprend un arrangement de mémoire tampon (9, 10) pour synchroniser le signal structuré en trames à écrire au moyen d'un signal de cycle d'écriture, le signal de cycle d'écriture étant dérivé du signal structuré en trames à écrire, avec le signal structuré en trames à lire au moyen d'un signal de cycle de lecture local ainsi qu'un circuit de commande (11, 12), lequel compense les variations de fréquence entre le signal de cycle d'écriture et le signal de cycle de lecture en insérant des octets de bourrage dans les unités de transport subordonnées du signal structuré en trames à lire.

3. Système de transmission selon la revendication 1 ou 2, **caractérisé en ce que** le circuit d'adaptation (5) est prévu pour insérer des octets de bourrage pour retarder au moins une unité de transport supérieure jusqu'à une position prévue dans le signal structuré en trames adapté.

4. Système de transmission selon l'une des revendications précédentes, **caractérisé en ce que** l'étage spatial (15) du réseau de connexion (6) est prévu pour retransmettre
- les octets des signaux à synchronisation de trame fournis par les étages temporels (14) sur certaines sorties de l'étage spatial (15) pour former des signaux structurés en trames sortants,
- les octets d'une unité de transport fournis par un étage temporel (14) à une sortie donnée de l'étage spatial (15) pour former un signal avec les octets d'une unité de transport subordonnée et
- un signal à recevoir avec une unité de transport à une sortie de l'étage spatial (15) pour insérer les octets de l'unité de transport dans un signal structuré en trames sortant.

5. Système de transmission selon l'une des revendications précédentes, **caractérisé en ce que** le signal structuré en trames est un signal STM-1 et que le circuit d'adaptation (5) est prévu soit pour retarder un container virtuel VC-4 ou à chaque fois un container virtuel VC-3 dans une unité AU-3 jusqu'à une position prédéfinie dans la trame STM-1.

6. Système de transmission selon la revendication 5, **caractérisé en ce que** l'étage temporel (14) du réseau de connexion (6) comprend un circuit de détection (17) pour détecter le début de la trame d'un signal STM-1, un circuit mémoire (16) pour mémoriser temporairement les octets d'un signal STM-1, un générateur d'adresses d'écriture (18) commandé par le circuit de détection (17) et un générateur d'adresses de lecture (19) commandé par le circuit de détection (17) et que le réseau de connexion (6) comprend un circuit de réglage (21) qui est prévu pour délivrer la chronologie des octets à lire dans le circuit mémoire (16) et les chemins de liaison à commuter par colonne pour l'étage spatial (15).

7. Système de transmission selon la revendication 6, **caractérisé en ce que** le générateur d'adresses d'écriture (18) comprend un premier arrangement de compteur avec un compteur de colonnes pour fournir les adresses pour l'opération d'écriture du circuit mémoire (16).

8. Système de transmission selon la revendication 6 ou 7, **caractérisé en ce que**
le générateur d'adresses de lecture (19) comprend un deuxième arrangement de compteur (22) avec un compteur de colonnes et une première mémoire de tableau (23),
le deuxième arrangement de compteur (22) est prévu pour fournir les adresses pour la première mémoire de tableau (23),
la première mémoire de tableau (23) est prévue pour convertir une adresse fournie par le deuxième arrangement de compteur (22) en une adresse mémorisée donnée pour l'opération de lecture du circuit mémoire (16) et
le circuit de réglage (21) est prévu pour acheminer le tableau de conversion à la première mémoire de tableau (23).

9. Système de transmission selon la revendication 6, 7 ou 8, **caractérisé en ce que**
un générateur de réglage (27) commandé par le circuit de détection (17) de l'étage temporel (14) comprend un troisième arrangement de compteur avec un compteur de colonnes et une deuxième mémoire de tableau (24),
le troisième arrangement de compteur (25) est prévu pour fournir les adresses pour la deuxième mémoire de tableau (24),
la deuxième mémoire de tableau (24) est prévue pour convertir une adresse fournie par le troisième arrangement de compteur (25) en une valeur de réglage donnée pour les chemins de liaison de l'étage spatial (15) et
le circuit de réglage (21) est prévu pour acheminer le tableau de conversion à la deuxième mémoire de tableau (24).

10. Système de transmission selon les revendications 7, 8 et 9, **caractérisé en ce que**
le premier arrangement de compteur (18) et la première mémoire de tableau (23) ne sont chacun prévus que pour fournir les bits de poids faible de la valeur du compteur ou de la mémoire.

11. Système de transmission selon les revendications 7, 8 et 9 ou 10, **caractérisé en ce que**
le premier, le deuxième et le troisième arrangement de compteur (18, 22, 25) comprennent encore un compteur de lignes (29), un circuit d'évaluation (30) et un circuit de validation (31),
le compteur de lignes (29) commandé par le compteur de colonnes (28) et le compteur de colonnes (28) sont prévus pour acheminer leurs valeurs comptées au circuit d'évaluation (30),
le circuit d'évaluation (30) est prévu pour fournir une valeur de validation au circuit de validation (31) au moins en l'absence d'un SOH et que le circuit de validation (31) est prévu pour valider une adresse fournie par le compteur de colonnes (28) en présence d'une valeur de validation.

12. Dispositif de transmission à utiliser dans un système de transmission selon l'une des revendications 1 à 11 pour reformer au moins un signal sortant, présentant une structure de trame prédéfinie, d'une hiérarchie numérique synchrone, notamment par substitution des unités de transport d'au moins d'un signal reçu structuré en trames au moyen d'un réseau de connexion (6), la structure en trames présentant des colonnes et des lignes et les unités de transport contenant des données prédéfinies du signal structuré en trames correspondant, **caractérisé en ce que**
les unités de transport de chaque signal structuré en trames sont réparties en unités de transport supérieures et subordonnées (VC-4, VC-3 ou TU-2, TU-3, TU-11, TU12),
il est prévu au moins un circuit d'adaptation (5) qui place au moins le début d'une unité de transport supérieure en une position prédéfinie dans le signal structuré en trames reçu en insérant des octets de bourrage et produit ainsi un signal structuré en trames adapté, et
le réseau de connexion (6) comprend au moins un étage temporel (14) avec un circuit mémoire (16) qui sont prévus pour écrire et pour identifier par colonne les octets à mémoriser du signal structuré en trames adapté et pour lire les octets identifiés par colonne dans un ordre donné pour former au moins un signal structuré en trames sortant.
